# EUROPÄISCHE PATENTSCHRIFT

(11) **EP 2 285 679 B1**
(45) Veröffentlichungstag und Bekanntmachung des Hinweises auf die Patenterteilung: **04.07.2012**
(21) Anmeldenummer: 09757226.7
(22) Anmeldetag: 28.05.2009
(51) Int. Cl.: B64D 13/00, F25D 1/00

(54) **SYSTEM UND VERFAHREN ZUR KÜHLUNG EINER WÄRMEBELASTETEN EINRICHTUNG IN EINEM FAHRZEUG, INSBESONDERE EINEM LUFTFAHRZEUG**
SYSTEM AND METHOD FOR COOLING A DEVICE SUBJECTED TO HEAT IN A VEHICLE, PARTICULARLY AN AIRCRAFT
SYSTÈME ET PROCÉDÉ DE REFROIDISSEMENT D'UN DISPOSITIF SOUMIS À UNE CHARGE THERMIQUE DANS UN VÉHICULE, NOTAMMENT UN AÉRONEF

(30) Priorität: 03.06.2008 DE 102008026536; 03.06.2008 US 58257
(43) Veröffentlichungstag der Anmeldung: 23.02.2011
(73) Patentinhaber: Airbus Operations GmbH, 21129 Hamburg (DE)
(72) Erfinder: BUCHHOLZ, Uwe, 21640 Bliedersdorf (DE); COLBERG, Carsten, 21147 Hamburg (DE); HEESCH, Michael, 25474 Hasloh (DE)
(74) Vertreter: Schicker, Silvia
(86) Internationale Anmeldenummer: PCT/EP2009/003831
(87) Internationale Veröffentlichungsnummer: WO 2009/146843

(56) Entgegenhaltungen:
- EP-A- 0 584 733
- WO-A-2008/140972
- DE-A1- 2 936 462
- DE-C- 740 169
- JP-A- 2001 010 595
- JP-A- 2001 183 026
- US-A- 4 819 720
- US-A- 5 702 073

## Beschreibung

Die vorliegende Erfindung betrifft ein System und ein Verfahren zur Kühlung einer wärmebelasteten Einrichtung in einem Fahrzeug, insbesondere einem Luftfahrzeug.

An Bord eines Luftfahrzeugs ist eine Vielzahl von verschiedenen technischen Einrichtungen vorgesehen, die Wärme erzeugen und die zur Gewährleistung einer sicheren Funktionsweise gekühlt werden müssen. Zu diesen technischen Einrichtungen gehören beispielsweise die elektronischen Steuerkomponenten des Luftfahrzeugs. Darüber hinaus ist es häufig erforderlich, an Bord eines Luftfahrzeugs transportierte Frachtgüter oder zur Versorgung der Passagiere und der Crew benötigte Lebensmittel kühl zu lagern. Schließlich kann es wünschenswert sein, die Klimaanlage des Luftfahrzeugs zu unterstützen. Aus dem Stand der Technik sind verschiedene Luftfahrzeug-Kühlsysteme bekannt, die Umgebungsluft zur Kühlung wärmebelasteter Einrichtungen an Bord des Flugzeugs nutzen.

Aus der DE 38 12 739 C1 ist es beispielsweise bekannt, eine Kühlkammer innerhalb einer Bordküche eines Flugzeuges nahe der Außenhaut des Flugzeuges anzuordnen und zwischen der Kühlkammer und der Außenhaut des Flugzeugs eine Kaltluftkammer vorzusehen. In der Kaltluftkammer wird Luft als Kälteträgermedium durch Wärmeaustausch mit der ohne Wärmedämmschicht ausgeführten Flugzeugaußenhaut abgekühlt und anschließend der Kühlkammer zum Kühlen eines Servicewagens zugeführt, der beispielsweise mit zu kühlenden Getränken oder Speisen gefüllt ist. Das aus der DE 38 12 739 C1 bekannte Kühlsystem hat den Nachteil, dass durch die Verwendung von Luft als Kälteträgermedium zum Abtransport großer Wärmemengen große Luftvolumenströme erforderlich sind. Die Kaltluftkammer beansprucht daher ein vergleichsweise großes Einbauraumvolumen. Darüber hinaus muss eine mittels des in der DE 38 12 739 C1 beschriebenen Kühlsystems gekühlte wärmebelastete Einrichtung in räumlicher Nähe zur Flugzeugaußenhaut angeordnet sein, um Druckverluste und folglich eine Beeinträchtigung der Wärmeabfuhr von der wärmebelasteten Einrichtung zu vermeiden.

Die DE 42 27 965 A1 beschreibt ein Kühlsystem zur Kühlung von an Bord eines Flugzeugs gelagerten Lebensmitteln, das einen von einer zu kühlenden Wärmeträgerflüssigkeit durchströmten Oberflächenwärmetauscher umfasst. Der Oberflächenwärmetauscher ist auf einer Außenfläche einer Flugzeugaußenhaut angebracht, so dass die den Oberflächenwärmetauscher durchströmende Wärmeträgerflüssigkeit durch Wärmeaustausch mit der Umgebungsluft gekühlt wird. Der auf der Außenfläche der Flugzeugaußenhaut angebrachte Oberflächenwärmetauscher erhöht jedoch in nachteiliger Weise den aerodynamischen Widerstand und folglich den Kraftstoffverbrauch des Luftfahrzeugs. Darüber hinaus müssen Leitungen für die den Oberflächenwärmetauscher durchströmende Wärmeträgerflüssigkeit durch die Flugzeugaußenhaut hindurchgeführt werden, was eine Erhöhung des Montageaufwands und des Leckagerisikos zu Folge hat.

Die DE 103 61 645 A1 offenbart ein Kühlsystem zum Kühlen von wärmeerzeugenden Einrichtungen an Bord eines Flugzeugs, bei dem eine Kältemaschine Umgebungsluft von außerhalb des Flugzeugdruckrumpfs als Wärmesenke zur Wärmeabgabe nutzt und warme Abluft an die Umgebung außerhalb des Flugzeugdruckrumpfs abgibt. Um eine ordnungsgemäße Umgebungsluftzufuhr zu der Kältemaschine sowie eine ordnungsgemäße Abluftabfuhr von der Kältemaschine zu gewährleisten, müssen in der Flugzeugaußenhaut entsprechende Lufteinlass- und Luftauslassöffnungen vorgesehen werden. Dadurch wird jedoch wiederum in nachteiliger Weise der aerodynamische Widerstand und folglich der Kraftstoffverbrauch des Flugzeugs erhöht.

Aus der Patentschrift US 5 702 073 ist ein Flüssigkeitskühlsystem zur Kühlung wärmebelasteter elektronischer Einrichtungen an Bord eines Flugzeugs bekannt. Es zeigt einen geschlossenen Kühlkreislauf mit mehreren Wärmetauschern, wobei jeder Wärmetauscher eine von einem zu kühlenden Medium durchströmte Rohrleitung umfasst, die mit einer aus Kupfer, Aluminium oder einem Kohlefaserverbundmaterial bestehenden Platte thermisch gekoppelt ist. Die Platte ist ihrerseits an einer Innenseite einer Flugzeugaussenhaut befestigt und ermöglicht somit eine Abfuhr von Wärme von dem die Rohrleitung durchströmenden Medium an die Flugzeugumgebung.

Der vorliegenden Erfindung liegt die Aufgabe zugrunde, ein flexibel einsetzbares, einbauraumsparendes Kühlsystem zur Kühlung einer wärmebelasteten Einrichtung in einem Fahrzeug, insbesondere einem Luftfahrzeug, bereitzustellen, das Umgebungsluft zur Kühlung der wärmebelasteten Einrichtung nutzt.

Zur Lösung dieser Aufgabe umfasst ein erfindungsgemäßes Kühlsystem zur Kühlung einer wärmebelasteten Einrichtung in einem Fahrzeug, insbesondere einem Luftfahrzeug, einen Kühlkreislauf, der von einem Wärmeträgerfluid durchströmt wird und thermisch mit der wärmebelasteten Einrichtung gekoppelt ist, um Wärme von der wärmebelasteten Einrichtung abzuführen. Ferner umfasst das erfindungsgemäße Kühlsystem einen Wärmetauscher, der einen thermisch mit der Außenumgebung gekoppelten Abschnitt umfasst. Unter "Außenumgebung" wird hier die Außenatmosphäre verstanden. Der Wärmetauscher des erfindungsgemäßen Kühlsystems nutzt folglich die in der Umgebungs- oder Außenluft enthaltene Kühlenergie, um das den Kühlkreislauf durchströmende Wärmeträgerfluid auf eine gewünschte tiefe Tempera-tur abzukühlen. Der Abschnitt des Wärmetauschers ist über die Außenhaut des Fahrzeugs thermisch mit der Außenumgebung gekoppelt. Mit anderen Worten, die thermische Kopplung zwischen dem Abschnitt des Wärmetauschers und der Außenumgebung wird durch eine thermische Kopplung des Wärmetauscherabschnitts mit der Fahrzeugaußenhaut realisiert. Der Wärmetauscher selbst ist jedoch innerhalb des Fahrzeugs angeordnet.

Durch die Nutzung der Fahrzeugaußenhaut zur thermischen Kopplung des Wärmetauscherabschnitts mit der Außenumgebung kann der Wärmetauscher besonders einbauraumsparend ausgebildet werden. Darüber hinaus ist durch die unmittelbare Kopplung des Wärmetauschers an die Außenumgebung ein besonders effektiver Abtransport auch großer Wärmemengen möglich. Mit Hilfe des Kühlkreislaufs kann auch eine nicht in unmittelbarer Nähe der Fahrzeugaußenhaut angeordnete wärmebelastete Einrichtung von dem erfindungsgemäßen Kühlsystem mit Kühlenergie versorgt werden. Dadurch kann der Einbauort dieser wärmebelasteten Einrichtung flexibel gewählt werden. Ein weiterer Vorteil des erfindungsgemäßen Kühlsystems besteht darin, dass es die Nutzung der Umgebungs- oder Außenluft enthaltenden Kühlenergie ermöglich, ohne dass hierzu erforderlich wäre, einen Wärmetauscher auf eine Außenfläche der Fahrzeugaußenhaut aufzubringen oder Lufteinlass- bzw. Luftauslassöffnungen oder Durchführungen für Leitungen in der Fahrzeugaußenhaut auszubilden. Durch den Wärmetauscher des erfindungsgemäßen Kühlsystems wird folglich der aerodynamische Widerstand des Fahrzeugs nicht erhöht, so dass eine Erhöhung des Kraftstoffverbrauchs des Fahrzeugs wirksam vermieden werden kann. Schließlich kann gegebenenfalls, je nach Anwendungsfall oder Systemarchitektur, bei dem erfindungsgemäßen Kühlsystem durch die Nutzung der in der Umgebungs- oder Außenluft enthaltenen Kühlenergie auf den Einsatz einer zusätzlichen Kältemaschine zur Kühlung des den Kühlkreislauf durchströmenden Wärmeträgerfluids verzichtet werden.

Der Wärmetauscher umfasst eine thermisch mit dem Kühlkreislauf gekoppelte Rohrleitung. Die Rohrleitung des Wärmetauschers kann unmittelbar in den Kühlkreislauf integriert sein und von dem in dem Kühlkreislauf zirkulierenden Wärmeträgerfluid durchströmt werden. Alternativ dazu ist jedoch auch eine lediglich thermische Kopplung der Rohrleitung des Wärmetauschers mit dem von Wärmeträgerfluid durchströmten Kühlkreislauf denkbar. Die Rohrleitung des Wärmetauschers ist vorzugsweise so geformt, dass sie einen großen Teil der Fläche des Wärmetauschers einnimmt, um einen optimalen Wärmetransfer auf die Umgebungs- oder Außenluft zu ermöglichen. Beispielsweise kann sich die Rohrleitung mit einer Mehrzahl von Windungen durch den Wärmetauscher erstrecken.

Die Rohrleitung des Wärmetauschers ist in Form eines Kapillarrohrs ausgebildet. Das Kapillarrohr weist einen Innendurchmesser auf, der klein genug ist, um im Betrieb des Wärmetauschers zu entsprechenden erwünschten Kapillareffekten zu führen. Das Kapillarrohr kann dabei in Abhängigkeit des den Wärmetauscher durchströmenden Wärmeträgerfluids dimensioniert sein:

Die Rohrleitung des Wärmetauschers ist in eine Matte integriert, deren Kontur an eine Kontur eines Abschnitts der Fahrzeugaußenhaut angepasst ist, über den der Wärmetauscherabschnitt thermisch mit der Außenumgebung gekoppelt ist. Die Matte kann beispielsweise aus einem Kunststoffmaterial, aus einem Kunststoffschaum oder einem Fasermaterial bestehen und zur Befestigung an einer Innenfläche der Fahrzeugaußenhaut vorgesehen sein. Eine besonders einfache Montage der Matte an der Innenfläche der Fahrzeugaußenhaut ist dann möglich, wenn die Matte eine gewisse Flexibilität aufweist. Alternativ dazu ist es jedoch auch denkbar, die Rohrleitung des Wärmetauschers unmittelbar an der Fahrzeugaußenhaut zu befestigen.

Das Material der Matte kann, je nach Anwendungsfall, so gewählt werden, dass die Matte gewünschte Wärmeleitfähigkeitseigenschaften aufweist. Beispielsweise ist es denkbar, die in die Matte integrierte Rohrleitung im Bereich einer Oberfläche der Matte zu verlegen, die der Fahrzeugaußenhaut zugewandt ist, und die Matte aus einem Material mit einer geringen Wärmeleitfähigkeit zu fertigen. Die Matte hat dann eine gewisse Isolationswirkung. Alternativ dazu kann die Matte aus zwei verschiedenen Materialen mit unterschiedlichen Wärmeleitfähigkeiten bestehen. Eine eine hohe Wärmeleitfähigkeit aufweisende Schicht kann dann die thermische Kopplung mit der Fahrzeugaußenhaut herstellen und für einen guten Wärmetransfer an die Außenumgebung sorgen. Eine eine geringe Wärmeleitfähigkeit aufweisende Schicht kann dagegen eine von der Fahrzeugaußenhaut abgewandte Oberfläche des Wärmetauschers bilden und für eine gewisse Isolationwirkung sorgen.

Vorzugsweise ist die Matte mit der integrierten Rohrleitung lösbar an dem Abschnitt der Fahrzeugaußenhaut befestigt, über den der Wärmetauscherabschnitt thermisch mit der Außenumgebung gekoppelt ist. Die Matte mit der integrierten Rohrleitung kann dann einfach an der Fahrzeugaußenhaut montiert und, beispielsweise zu Inspektionszwecken, auch wieder einfach von der Fahrzeugaußenhaut gelöst werden. Geeignete Befestigungsmittel zur lösbaren Befestigung der Matte mit der integrierten Rohrleitung an dem den thermisch mit der Außenumgebung gekoppelten Abschnitt des Wärmetauschers bildenden Abschnitt der Fahrzeugaußenhaut umfassen beispielsweise Schrauben, Klettverbindungen, Klebeverbindungen etc..

Vorzugsweise ist das erfindungsgemäße Kühlsystem zur Kühlung einer wärmebelasteten Einrichtung zur Verwendung an Bord eines Flugzeugs vorgesehen. Der thermisch mit der Außenumgebung gekoppelte Abschnitt des Wärmetauschers ist dann über eine Flugzeugaußenhaut thermisch mit der Außenumgebung gekoppelt. Vorzugsweise ist die Flugzeugaußenhaut in einem Bereich, in dem sie thermisch mit dem Wärmetauscherabschnitt gekoppelt ist, um eine thermische Kopplung des Wärmetauscherabschnitts mit der Außenumgebung herzustellen, nicht mit einer inneren Isolation versehen, um eine optimale Wärmeabfuhr an die Umgebungs- oder Außenluft zu ermöglichen. Es ist jedoch möglich, eine von der Außenumgebung abgewandte Oberfläche des Wärmetauschers mit einer Isolierung zu versehen.

Der thermisch mit der Außenumgebung gekoppelte Abschnitt des Wärmetauschers ist vorzugsweise über einen im Bereich einer Flugzeugrumpfunterschale angeordneten Abschnitt der Flugzeugaußenhaut thermisch mit der Außenumgebung gekoppelt. Eine derartige Ausgestaltung ist insbesondere dann sinnvoll, wenn die Flugzeugaußenhaut im Bereich einer Flugzeugrumpfoberschale durchgängig mit einer inneren Isolation versehen ist, während im Bereich der Flugzeugrumpfunterschale zumindest abschnittsweise auf eine innere Isolation der Flugzeugaußenhaut verzichtet werden kann.

Grundsätzlich ist es für eine ordnungsgemäße Funktion des erfindungsgemäßen Kühlsystems lediglich erforderlich, dass ein Abschnitt des Wärmetauschers thermisch mit der Fahrzeugaußenhaut gekoppelt ist, um eine thermische Kopplung des Wärmetauscherabschnitts mit der Außenumgebung herzustellen. Hierzu kann der Wärmetauscher beispielsweise mit einer Innenfläche der Fahrzeugaußenhaut verbunden sein, um einen großflächigen Wärmeübergang zu ermöglichen. Alternativ dazu ist es jedoch auch denkbar, den Wärmetauscher derart in die Fahrzeugaußenhaut zu integrieren, dass der thermisch mit der Außenumgebung gekoppelte Abschnitt des Wärmetauschers durch einen Abschnitt der Fahrzeugaußenhaut selbst gebildet wird.

Der Kühlkreislauf des erfindungsgemäßen Kühlsystems kann von einem flüssigen Wärmeträgerfluid durchströmt werden. Ein flüssiges Wärmeträgerfluid ist insbesondere dann vorteilhaft, wenn große Wärmemengen von der wärmebelasteten Einrichtung abgeführt werden müssen. Ferner ist ein von einem flüssigen Wärmeträgerfluid durchströmter Kühlkreislauf besonders vorteilhaft einsetzbar, wenn er dazu dient, von mehreren in dem Fahrzeug verteilt angeordneten wärmebelasteten Einrichtung en Wärme abzuführen. Alternativ dazu kann in dem Kühlkreislauf des erfindungsgemäßen Kühlsystems auch ein zweiphasiges Wärmeträgerfluid zum Einsatz kommen, das infolge der Wärmeaufnahme von der wärmebelasteten Einrichtung verdampft und beim Abkühlen wieder in den flüssigen Aggregatzustand zurückversetzt wird.

Ferner kann der Kühlkreislauf auch von Luft durchströmt werden. Dies ist insbesondere dann sinnvoll, wenn die zu kühlende wärmebelastete Einrichtung in der Nähe der Fahrzeugaußenhaut angeordnet ist. Beispielsweise kann Luft aus einem Frachtraum oder einem anderen Bereich eines Luftfahrzeugs abgesaugt und über den Kühlkreislauf dem Wärmetauscher des erfindungsgemäßen Kühlsystems zugeführt werden. In dem Wärmetauscher kann die aus dem Frachtraum oder dem anderen Bereich des Luftfahrzeugs abgesaugte Luft durch Wärmeaustausch mit der Umgebungs- oder Außenluft auf eine gewünschte tiefe Temperatur gekühlt werden, bevor sie wieder in den Frachtraum oder den anderen Bereich des Luftfahrzeugs zurückgeführt wird.

Ein erfindungsgemäßes Verfahren zur Kühlung einer wärmebelasteten Einrichtung in einem Fahrzeug, insbesondere einem Luftfahrzeug, umfasst die Schritte Leiten eines Wärmeträgerfluids durch einen Kühlkreislauf, der thermisch mit der wärmebelasteten Einrichtung gekoppelt ist, um Wärme von der wärmebelasteten Einrichtung abzuführen, und thermisches Koppeln des den Kühlkreislauf durchströmenden Wärmeträgerfluids mit einem Wärmetauscher. Der Wärmetauscher gibt die ihm von dem Wärmeträgerfluid zugeführte Wärme über einen thermisch mit einer Außenhaut des Fahrzeugs gekoppelten Abschnitt an die Außenumgebung ab.

Die vorliegende Erfindung ist vorteilhaft in Fahrzeugen, wie z.B. Kraftfahrzeugen aber auch Zügen, insbesondere aber in Luftfahrzeugen einsetzbar. In besonders vorteilhafter Weise kann die vorliegende Erfindung in einem Flugzeug eingesetzt werden, das ein in der deutschen Patentanmeldung 10 2007 049 926 beschriebenes Klimatisierungssystem umfasst, da bei diesem Flugzeug zumindest Teile der Flugzeugaußenhaut im Bereich der Flugzeugrumpfunterschale nicht mit einer inneren Isolation versehen werden müssen.

Eine bevorzugte Ausführungsform eines erfindungsgemäßen Kühlsystems wird nun anhand der beigefügten schematischen Zeichnungen näher erläutert, von denen
- Figur 1: ein Kühlsystem zur Kühlung einer wärmebelasteten Einrichtung an Bord eine Flugzeugs zeigt, und
- Figur 2: eine Querschnittsdarstellung eines in dem Kühlsystem gemäß Figur 1 eingesetzten Wärmetauschers zeigt.

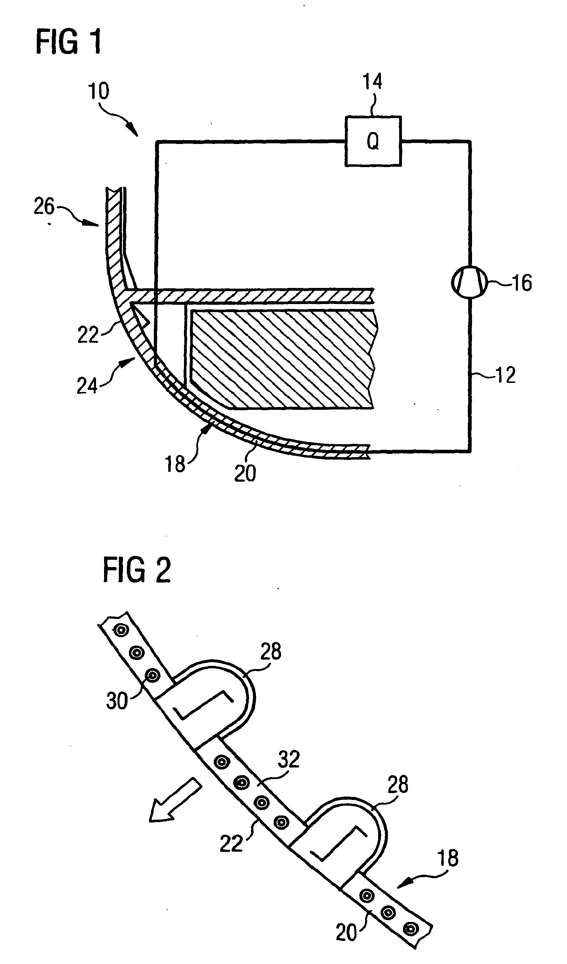

Ein in Figur 1 gezeigtes Flugzeugkühlsystem 10 umfasst einen von einer Wärmeträgerflüssigkeit durchströmten Kühlkreislauf 12, der thermisch mit einer wärmebelasteten Einrichtung 14 gekoppelt ist, um Wärme von der wärmebelasteten Einrichtung 14 abzuführen. Eine in Form einer Pumpe ausgebildete Fördereinrichtung 16 fördert die Wärmeträgerflüssigkeit durch den Kühlkreislauf 12. Ein Wärmetauscher 18 ist in den Kühlkreislauf 12 integriert und wird von der in dem Kühlkreislauf 12 im Kreislauf geführten Wärmeträgerflüssigkeit durchströmt.

Die in dem Kühlkreislauf 12 zirkulierende und durch den thermischen Kontakt mit der wärmebelasteten Einrichtung 14 erwärmte Wärmeträgerflüssigkeit wird in dem Wärmetauscher 18 durch Wärmeabfuhr an die Umgebungs- oder Außenluft gekühlt. Mit anderen Worten, der Wärmetauscher 18 verwendet die Umgebungs- oder Außenluft als Wärmesenke für die von der wärmebelasteten Einrichtung 14 abzuführende Wärme. Zu diesem Zweck weist der Wärmetauscher 18 einen der Außenumgebung zugewandten und somit thermisch mit der Außenumgebung gekoppelten Abschnitt 20 auf, der mit einer Flugzeugaußenhaut 22 verbunden und dadurch thermisch mit der Flugzeugaußenhaut 22 gekoppelt ist. Der Abschnitt der Flugzeugaußenhaut 22, über den der Wärmetauscherabschnitt 20 thermisch mit der Außenumgebung gekoppelt ist, ist im Bereich einer Flugzeugrumpfunterschale 24 angeordnet, wo die Flugzeugaußenhaut 22, anders als im Bereich einer Flugzeugrumpfoberschale 26 nicht mit einer inneren Isolation (in Figur 1 nicht gezeigt) versehen ist.

Wie insbesondere in Figur 2 zu erkennen ist, erstreckt sich der Wärmetauscher 18 flächig zwischen die Flugzeugrumpfunterschale 24 versteifenden Stringern 28 und in der Figur 2 nicht gezeigten Spanten. Der Wärmetauscher 18 umfasst eine in Form eines Kapillarrohrs ausgebildete Rohrleitung 30, die in den Kühlkreislauf 12 des Kühlsystems 10 integriert sind ist von der in den Kühlkreislauf 12 zirkulierenden Wärmeträgerflüssigkeit durchströmt wird. Die Rohrleitung 30 ist in eine aus einem Fasermaterial bestehenden Matte 32 integriert und erstreckt sich mit einer Vielzahl von Windungen durch die Matte 32. Eine Form und Kontur der Matte 32 ist an eine Form und Kontur des Abschnitts der Flugzeugaußenhaut 22 angepasst, über den der Wärmetauscherabschnitt 20 thermisch mit der Außenumgebung gekoppelt ist. Mit anderen Worten, die Kontur der Matte 32 weist eine Krümmung auf, die an eine Krümmung der Flugzeugaußenhaut 22 angepasst ist. Die Matte 32 mit der integrierten Rohrleitung 30 ist lösbar an der Flugzeugaußenhaut 22 befestigt.

## Patentansprüche

1. Fahrzeug, insbesondere luftfahrzeug mit einem Kühlsystem (10) zur Kühlung einer wärmebelasteten Einrichtung (14) mit:
- einem Kühlkreislauf (12), der von einem Wärmeträgerfluid durchströmt wird und thermisch mit der wärmebelasteten Einrichtung (14) gekoppelt ist, um Wärme von der wärmebelasteten Einrichtung (14) abzuführen, und
- einem Wärmetauscher (18), der einen Abschnitt (20) umfasst, der über eine Außenhaut (22) des Fahrzeugs thermisch mit der Außenumgebung gekoppelt ist, wobei der Wärmetauscher (18) eine thermisch mit dem Kühlkreislauf (12) gekoppelte Rohrleitung (30) umfasst,
**dadurch gekennzeichnet, dass** die Rohrleitung (30) des Wärmetauschers (18) in Form eines Kapillarrohrs ausgebildet und in eine Matte (32) integriert ist, deren Kontur an eine Kontur eines Abschnitts der Fahrzeugaußenhaut (22) angepasst ist, über den der Wärmetauscherabschnitt (20) thermisch mit der Außenumgebung gekoppelt ist.

2. Fahrzeug nach Anspruch 1,
**dadurch gekennzeichnet, dass** der Abschnitt (20) des Wärmetauschers (18) über eine Flugzeugaußenhaut (22) thermisch mit der Außenumgebung gekoppelt ist.

3. Fahrzeug nach Anspruch 2,
**dadurch gekennzeichnet, dass** der Abschnitt (20) des Wärmetauschers (18) über einen im Bereich einer Flugzeugrumpfunterschale angeordneten Abschnitt der Flugzeugaußenhaut (22) thermisch mit der Außenumgebung gekoppelt ist.

4. Fahrzeug nach einem Ansprüche 1 bis 3,
**dadurch gekennzeichnet, dass** der Wärmetauscher (18) derart in die Außenhaut (22) des Fahrzeugs integriert ist, dass der thermisch mit der Außenumgebung gekoppelte Abschnitt (20) des Wärmetauschers (18) durch einen Abschnitt der Fahrzeugaußenhaut (22) gebildet wird.

5. Fahrzeug nach einem der Ansprüche 1 bis 4,
**dadurch gekennzeichnet, dass** die Matte (32) mit der integrierten Rohrleitung (30) lösbar an dem Abschnitt der Fahrzeugaußenhaut (22) befestigt ist, über den der Wärmetauscherabschnitt (20) thermisch mit der Außenumgebung gekoppelt ist.

6. Fahrzeug nach einem der Ansprüche 1 bis 5,
**dadurch gekennzeichnet, dass** der Kühlkreislauf (12) von einem flüssigen Wärmeträgerfluid oder von Luft durchströmt wird.

7. Verfahren zur Kühlung einer wärmebelasteten Einrichtung (14) in einem Fahrzeug, insbesondere einem Luftfahrzeug, mit den Schritten:
- Leiten eines Wärmeträgerfluids durch einen Kühlkreislauf (12), der thermisch mit der wärmebelasteten Einrichtung (14) gekoppelt ist, um Wärme von der wärmebelasteten Einrichtung (14) abzuführen, und
- thermisches Koppeln des den Kühlkreislauf (12) durchströmenden Wärmeträgerfluids mit einem Wärmetauscher (18), wobei der Wärmetauscher (18) die ihm von dem Wärmeträgerfluid zugeführte Wärme über einen thermisch mit einer Außenhaut (22) des Fahrzeugs gekoppelten Abschnitt (20) an die Außenumgebung abgibt und der Wärmetauscher (18) mittels einer Rohrleitung (30) thermisch mit dem Kühlreislauf gekoppelt ist,
**dadurch gekennzeichnet, dass** die Rohrleitung (30) des Wärmetauschers (18) in Form eines Kapillarrohrs ausgebildet und in eine Matte (32) integriert ist, deren Kontur an eine Kontur eines Abschnitts der Fahrzeugaußenhaut (22) angepasst ist, über den der Wärmetauscherabschnitt (20) thermisch mit der Außenumgebung gekoppelt ist.

## Claims

1. Vehicle, in particular aircraft, comprising a cooling system (10) for cooling a heat-loaded device (14), having:
- a cooling circuit (12), through which flows a heat transfer fluid and which is thermally coupled to the heat-loaded device (14) in order to remove heat from the heat-loaded device (14), and
- a heat exchanger (18) comprising a section (20) which is thermally coupled to the outside environment via an outer skin (22) of the vehicle, wherein the heat exchanger (18) comprises a conduit (30) which is thermally coupled to the cooling circuit (12),
**characterised in that** the conduit (30) of the heat exchanger (18) is in the form of a capillary tube and integrated in a mat (32), the contour of which is adapted to a contour of a section of the vehicle outer skin (22) via which the heat exchanger section (20) is thermally coupled to the outside environment.

2. Vehicle according to Claim 1,
**characterised in that** the section (20) of the heat exchanger (18) is thermally coupled to the outside environment via an aircraft outer skin (22).

3. Vehicle according to Claim 2,
**characterised in that** the section (20) of the heat exchanger (18) is thermally coupled to the outside environment via a section of the aircraft outer skin (22) arranged in the region of an aircraft fuselage lower shell.

4. Vehicle according to one of Claims 1 to 3,
**characterised in that** the heat exchanger (18) is integrated in the outer skin (22) of the vehicle in such a way that the section (20) of the heat exchanger (18) thermally coupled to the outside environment is formed by a section of the vehicle outer skin (22).

5. Vehicle according to one of Claims 1 to 4,
**characterised in that** the mat (32) with the integrated conduit (30) is detachably fastened to the section of the vehicle outer skin (22) via which the heat exchanger section (20) is thermally coupled to the outside environment.

6. Vehicle according to one of Claims 1 to 5,
**characterised in that** a liquid heat transfer fluid or air flows through the cooling circuit (12).

7. Method for cooling a heat-loaded device (14) in a vehicle, particularly an aircraft, having the steps of:
- conveying a heat transfer fluid through a cooling circuit (12) which is thermally coupled to the heat-loaded device (14) in order to remove heat from the heat-loaded device (14), and
- thermally coupling the heat transfer fluid, flowing through the cooling circuit (12), to a heat exchanger (18), wherein the heat exchanger (18) releases the heat supplied to it by the heat transfer fluid to the outside environment via a section (20) thermally coupled to an outer skin (22) of the vehicle, and the heat exchanger (18) is thermally coupled to the cooling circuit (12) by means of a conduit (30), **characterised in that** the conduit (30) of the heat exchanger (18) is in the form of a capillary tube and integrated in a mat (32), the contour of which is adapted to a contour of a section of the vehicle outer skin (22) via which the heat exchanger section (20) is thermally coupled to the outside environment

## Revendications

1. Système de refroidissement (10) destiné à refroidir un dispositif soumis à la chaleur (14) dans un véhicule, notamment un aéronef, comprenant :
- un circuit de refroidissement (12) traversé par un fluide caloporteur et thermiquement couplé audit dispositif soumis à la chaleur (14) pour évacuer de la chaleur dudit dispositif (14), et
- un échangeur de chaleur (18) comportant un segment (20) couplé thermiquement à l'environnement extérieur par l'intermédiaire d'une enveloppe extérieure de véhicule (22), ledit échangeur de chaleur (18) comportant une conduite (30) couplée thermiquement audit circuit de refroidissement (12),
**caractérisé en ce que** ladite conduite (30) de l'échangeur de chaleur (18) est conçue sous forme d'un tube capillaire et est intégrée dans une natte (32) dont le contour est adapté au contour d'un segment de l'enveloppe extérieure (22) du véhicule, par l'intermédiaire duquel segment le segment d'échangeur de chaleur (20) est couplé thermiquement à l'environnement extérieur.

2. Véhicule selon la revendication 1,
**caractérisé en ce que** le segment (20) de l'échangeur de chaleur (18) est couplé thermiquement à l'environnement extérieur par l'intermédiaire d'une enveloppe extérieure d'aéronef (22).

3. Véhicule selon la revendication 2,
**caractérisé en ce que** le segment (20) de l'échangeur de chaleur (18) est couplé thermiquement à l'environnement extérieur par l'intermédiaire d'un segment de l'enveloppe extérieure d'aéronef (22) disposé dans la zone d'une coque inférieure du fuselage.

4. Véhicule selon l'une des revendications 1 à 3,
**caractérisé en ce que** l'échangeur de chaleur (18) est intégré de telle sorte dans l'enveloppe extérieure (22) du véhicule que le segment (20) de l'échangeur de chaleur (18) couplé thermiquement à l'environnement extérieur est formé par un segment de l'enveloppe extérieure (22) du véhicule.

5. Véhicule selon l'une des revendications 1 à 4,
**caractérisé en ce que** la natte (32) avec la conduite intégrée (30) est fixée de manière amovible au segment de l'enveloppe extérieure (22) du véhicule, par l'intermédiaire duquel segment le segment (20) de l'échangeur de chaleur est couplé thermiquement à l'environnement extérieur.

6. Véhicule selon l'une des revendications 1 à 5,
**caractérisé en ce que** le circuit de refroidissement (12) est traversé par un fluide caloporteur liquide ou par de l'air.

7. Procédé destiné à refroidir un dispositif soumis à la chaleur (14) dans un véhicule, notamment un aéronef, comprenant les étapes suivantes :
- passage d'un fluide caloporteur à travers un circuit de refroidissement (12) couplé thermiquement au dispositif soumis à la chaleur (14) pour évacuer de la chaleur dudit dispositif (14), et
- couplage thermique du fluide caloporteur traversant le circuit de refroidissement (12) à un échangeur de chaleur (18), ce dernier (18) cédant à l'environnement extérieur la chaleur qui lui a été transmise par le fluide caloporteur par l'intermédiaire d'un segment (20) couplé thermiquement à une enveloppe extérieure (22) du véhicule et l'échangeur de chaleur (18) étant couplé thermiquement au circuit de refroidissement au moyen d'une conduite (30),
**caractérisé en ce que** la conduite (30) de l'échangeur de chaleur (18) est conçue sous forme d'un tube capillaire et est intégrée dans une natte (32) dont le contour est adapté au contour d'un segment de l'enveloppe extérieure (22) du véhicule, par l'intermédiaire duquel segment le segment d'échangeur de chaleur (20) est couplé thermiquement à l'environnement extérieur.
